# EUROPEAN PATENT APPLICATION

(11) **EP 1 978 427 A2**
(43) Date of publication of application: **08.10.2008**
(21) Application number: 08006759.8
(22) Date of filing: 02.04.2008
(51) Int. Cl.: G05B 19/401

(54) **Method for displaying the shape of a surface**

(30) Priority: 03.04.2007 JP 2007097637
(71) Applicant: FANUC LTD, Minamitsuru-gun, Yamanashi 401-0597 (JP)
(72) Inventor: Hon, Yonpyo, Minamitsuru-gun Yamanashi 401-0597 (JP); Ebihara, Kenzo, Minamitsuru-gun Yamanashi 401-0597 (JP); Yamamoto, Akira, Minamitsuru-gun Yamanashi 401-0597 (JP); Kawai, Tomohiko, Minamitsuru-gun Yamanashi 401-0597 (JP)
(74) Representative: Thum, Bernhard

(57) **Abstract**

An image display method for displaying a surface shape by measuring the surface shape of an object surface of a work piece to be measured with a contact probe placed on a machine and displaying the surface shape of said object surface on a screen based on measured shape data of the object surface, the method having: measuring a multiplicity of measuring positions on the object surface to be measured with the probe while relatively moving the probe on the object surface in order to obtain continuous shape data of the object surface; and displaying the surface shape of the object surface in real time based on the continuous shape data.

## Description

### Background of the Invention

### 1. Field of the Invention

The present invention relates to an image display method for displaying a surface shape by measuring an object surface a work piece with a contact probe placed on a machine and displaying the surface shape of the object surface based on the measured shape data.

### 2. Description of the Related Art

Generally, an example of an image display method for displaying a surface shape by measuring an object surface of a work piece to be measured with a contact type probe placed on a machine and displaying the surface shape of the object surface based on the measured surface data, has been disclosed, in Japanese Patent Publication No. 2005-63074. In this method, shape data of an object surface to be measured are obtained as discrete data in the form of a point cloud, and spline interpolation or transformation in orthogonal polynomial representation is performed to obtain the height Z of the object surface of a work piece at a coordinate position in two mutually orthogonal X-Y axes.

Shape data are obtained as height data in the direction of Z axis corresponding to coordinate positions in two mutually orthogonal X-Y axes when the probe is moved in straight lines in the directions of X and Y axes on the object surface of the work piece to be measured. Thus, the probe is moved continuously in the directions of X and Y axes while being in contact with the object surface at a specified contact pressure, and a displacement of the probe in Z direction at a coordinate position in two mutually orthogonal X and Y coordinates is measured in a specified timing in order to obtain 3-dimensional shape data (X, Y, Z).

The shape data obtained as discrete and discontinuous data are interpolated in curves in the directions of X and Y axes, and a smooth 3-dimensional curved surface is formed by using CAD. CAD data are transformed into CAM data, and a tool path of a diamond cutter for performing groove machining with a predetermined cutting depth is determined.

In a conventional method, the shape data measured by a probe on a machine are stored as data file, and at the same time, are transformed into CAD data by using a shape analysis software. The CAD data are, for example, compared with CAD data of an ideal work piece, and CAM data are calculated for machining the work piece into an ideal shape using the diamond cutter or the like. Such CAD/CAM system is usually adopted as a system for machining a work piece into a specified shape efficiently and precisely.

In a conventional method, however, there is a problem in that, if there is an anomaly in the shape of a work piece due to external disturbances such as a machine failure, vibration of a machine, damage of a tool, or the like, or if the work piece is inclined due to imperfections of a method for fastening the work piece, or if chips are attached to the work piece, the measured shape data may become anomalous, and next machining operation may be performed continuously without recognition for these anomalies. Since measurements or the next machining operations cannot be interrupted or corrected, expensive products may be lost or wasted, and productivity of the machining production line may be lowered.

### Summary of the Invention

It is an object of the present invention to provide an image display method for displaying a surface shape that permits a worker to recognize, at any time, the surface state of an object surface of a work piece measured with a contact probe placed on a machine, and to instantly grasp an anomaly of a machine or an anomaly of the work piece reflected in the measured data, and is thus capable of improving reliability of the machining operation.

In order to attain above object, in accordance with an aspect of the present invention, there is provided an image display method for displaying a surface shape by measuring an object surface of a work piece to be measured with a contact probe placed on a machine, and displaying the surface shape of the object surface on a screen based on measured shape data of the object surface, comprising measuring a multiplicity of measurement positions on the object surface while moving the probe relatively on the object surface in order to obtain continuous shape data of the object surface, and displaying, in real time, the surface shape of the object surface based on the continuous shape data.

In accordance with the above construction, by measuring the multiplicity of measurement positions on the object surface to be measured to obtain the continuous shape data while moving the probe relatively on the object surface, and by displaying the surface shape of the object surface in real time based on the obtained continuous shape data, the surface state of the object surface of the work piece to be measured can be recognized simultaneously with the measurement. Therefore, an anomaly of a machine or an anomaly of the work piece can be instantly grasped and reliability of a machining operation can be thereby improved.

In the image display method for displaying a surface shape as described above, it is also possible to calculate the continuous shape data from discontinuous shape data of the work piece using a mathematical computation method, and to display the shape data of the object surface based on the calculated continuous shape data. Thus, it is possible to calculate the continuous shape data from a multiplicity of discontinuous shape data measured at specified measurement positions. Thus, the shape data can be calculated as 2-dimensional data or 3-dimensional data.

In the image display method for displaying a surface shape as described above, it is also possible to calculate the continuous shape data by using curve interpolation of the adjoining discontinuous shape data. By using curve interpolation, the object surface can be displayed as a smooth curve or a smooth curved surface.

In the image display method for displaying a surface shape as described above, it is also possible to measure the surface shape of the object surface to be measured by relatively moving the probe in a direction orthogonal to a direction of a probe axis while keeping the probe in contact with the object surface to be measured under a specified pressure in an axial direction of the probe axis, such that the probe axis is relatively moved along the object surface of the work piece to be measured. It is thus possible to obtain the shape data of the object surface to be measured by adding displacement data in the axial direction of the probe to the 3-dimensional position coordinate expressed in the mutually orthogonal three axes coordinate system on the object surface to be measured.

In the image display method for displaying a surface shape as described above, it is also possible to display a magnitude of the numerical value of a sum of a displacement data in the axial direction of the probe and a machine coordinate in the direction of the probe axis by the brightness, such that the brightness is highest in a portion where the numerical value of the displacement data is a maximum, and that the brightness is gradually lowered as the numerical value of the displacement data decreases from the portion having the maximum numerical value. By thus displaying the magnitude of the numerical value of the displacement data of the probe by the brightness, it is possible to know the state of undulation including concavity and convexity of the object surface to be measured from a multiplicity of 2-dimensionally displayed measurement paths.

### Brief Description of the Drawings

The above and other objects, features and advantages of the present invention will become more apparent from the following description of preferred embodiments taken in conjunction with appended drawings, in which:
Fig. 1 is a front view of an embodiment of a machine processing system for carrying out an image display method for displaying a surface shape according to the present invention;
Fig. 2 is a view useful for explaining a coordinate system of three mutually orthogonal axes for a work piece attached to a machine tool of Fig. 1 and one axis coordinate system of a probe;
Fig. 3 is a flow chart useful for explaining the image display method implemented in the machine processing system of Fig. 1;
Fig. 4 is a perspective view of a work piece having an object surface to be measured;
Fig. 5 is a view useful for explaining the display method in which surface state of the object surface of Fig. 4 is shown by a multiplicity of 2-dimensional straight lines, and in which a different magnitude of the displacement in a height direction (displacement in Z direction that is normal to the plane of the paper) is displayed by different brightness;
Fig. 6 is a view useful for explaining a smooth curve obtained by curve interpolation of a multiplicity of discontinuous measurement data (point data) measured with a probe;
Fig. 7 is an explanatory view useful for showing the surface state of the object surface in 3-dimensions; and
Fig. 8 is an explanatory view useful for displaying the surface state of the object surface by 3-dimensional curved surface.

### Detailed Description

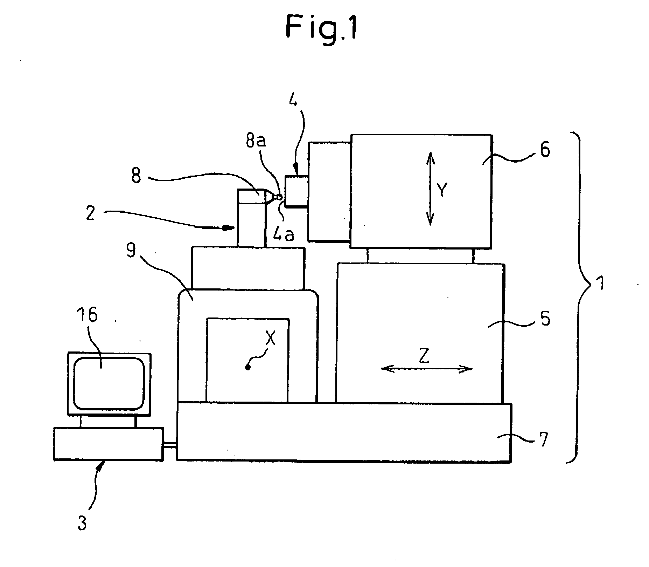

Now, the present invention will be described in more detail with reference to drawings showing specific examples of preferred embodiments thereof. Fig. 1 is a view showing an embodiment of a machine processing system for carrying out an image display method for displaying a surface shape according to the present invention.

This machine processing system comprises a machine tool 1 that holds an object work piece 4 to be measured, a measuring instrument 2 having a probe 8 in contact with an object surface 4a of the work piece 4 to be measured, and an image display device 3 that displays the surface state (undulation and the like) of the object surface 4a of the work piece 4 based on the discontinuous measurement data measured with the measuring instrument 2. This processing system is applied for carrying out an image display method for measuring the object surface 4a of the work piece 4, and at the same time, for recognizing the surface state of the object surface 4a in real time.

Although the machine tool 1 of the present embodiment is shown as a so-called horizontal type machine tool, the form of the machine tool is not especially limited to this type. It is provided as a machine tool capable of being moved in straight line in the direction of three mutually orthogonal axes. For convenience, in the machine tool 1 shown in Fig. 1, the vertical direction is taken as the direction of Y-axis, the horizontal direction orthogonal to Y-axis is taken as the direction of Z-axis, and the direction orthogonal to both Y-axis and Z-axis is taken as the direction of X-axis. Main constituents of this machine tool 1 include a block 9 in the form of Japanese katakana "ko" that can be moved in the direction of X-axis, a lower block 5 that can be moved in the direction of Z-axis, an upper block 6 that can be moved in the direction of Y-axis, and a main spindle block (not shown) having a rotational shaft in the direction parallel to Z-axis. The unshown main spindle block is disposed at a position corresponding to the measuring instrument 2, and a rotary tool for forming the object surface 4a of the work piece 4 can be removably attached to the main spindle block.

The work piece 4 to be measured is held on the end of the upper block 6 in horizontal position such that the object surface 4a to be measured is positioned in opposition to the probe 8 of the measuring instrument 2. The object surface 4a of the work piece 4 is a machined surface having been processed in a specified shape by a rotary tool such as a ball end mill. The work piece 4 is not removed from the machine tool 1, and the shape of the object surface 4a as a machined surface is measured with the contact probe 8 placed on the machine tool 1 in order to obtain new processing data by a CAD/CAM system.

The measuring instrument 2 comprises a device (not shown) for converting the intensity of interference fringes that is produced by reflection of laser light at a reflecting mirror into distance data, and a probe 8 having a contact (stylus) 8a made of ruby. The contact 8a is adapted to be displaced only in the direction of Z-axis (axial direction of the contact 8a). The displacement of the contact 8a, that is, the intensity of the interference fringe of laser light, is converted to an electrical signal. When the work piece 4 is moved in the plane (X-Y plane) perpendicular to Z-axis and in the direction of Z-axis with the contact 8a in contact with the object surface 4a to be measured under specified contact pressure, the irregularity and undulation of the object surface 4a is measured as the sum of the displacement of the contact 8a and the coordinate in the direction of Z-axis. A movement path of the probe 8 is same as a processing path, and the probe 8 measures the small error between the processing path and the actual shape as the displacement of the contact 8a.

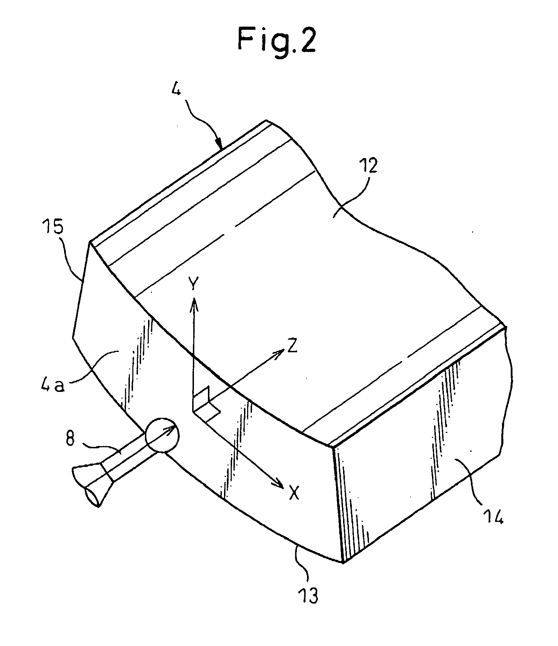

Although the measuring method with the probe 8 is not restricted to the present embodiment, it will be described below as an example of the measuring method with reference to Figs. 2 to 4. In Figs. 2 and 4, 3-dimensional coordinate system of the work piece 4 relative to the probe 8 is shown. In the Figures, an upper surface 12 and a lower surface 13 of the work piece 4 are arranged in the direction of Y-axis, and a left and right sides 14, 15 of the work piece 4 are arranged in the direction of X-axis, and the object surface 4a to be measured as an end surface of the work piece 4 is oriented in the direction of Z-axis.

In the measurement of the object surface 4a with the probe 8, the machine tool 1 moves the work piece 4 in the direction of X-axis such that the probe 8 is moved in the direction of X-axis relative to the object surface 4a of the work piece 4. That is, the machine tool 1 moves the block 9 as X-axis in the direction of X-axis such that the probe 8 scans the object surface 4a from one longitudinal end to the other longitudinal end in the direction of X-axis in relative one pass scanning.

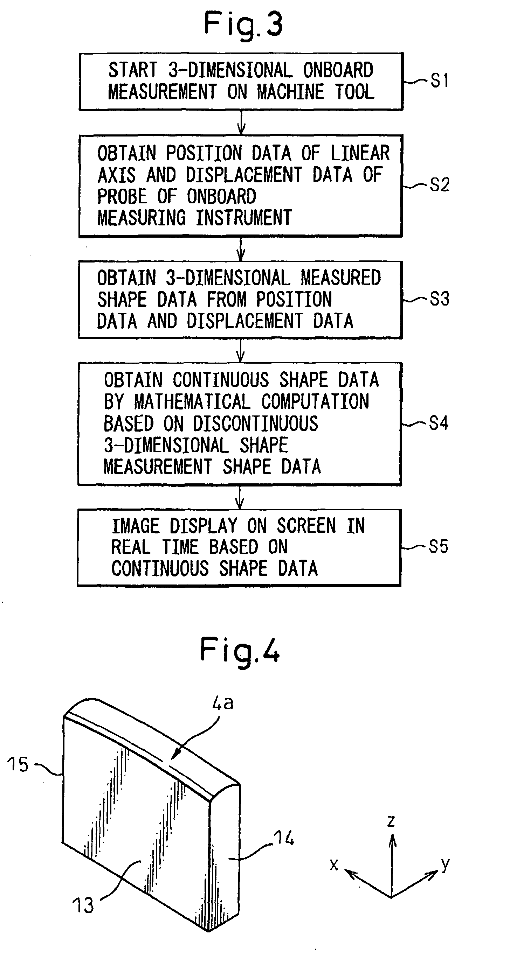

As shown in the flow chart of Fig. 3 showing the measurement method, at step S1, after relative positional relation of the probe 8 and the work piece 4 has been set, measurement of the object surface 4a of the work piece 4 on the machine tool 1 is started.

At step S2, a machine coordinate (X, Y, Z) at the measurement position and the displacement data of the probe 8 of the onboard measuring instrument 2 placed on the machine in the direction of Z-axis are obtained, and both data are added together to obtain the measurement data. Thus, the measurement data in one pass are obtained as discontinuous measurement data measured at a specified time interval.

Next, at step S3, 3-dimensional measurement data are obtained from the machine coordinate (X, Y, Z) and the displacement data of the probe 8. That is, after one pass of scanning with the probe 8, the work piece 4 is shifted by a specified pitch in the direction of Y-axis, and the block 9 is moved in the direction of X-axis such that the probe 8 again scans the object surface 4a from one longitudinal end to the other longitudinal end in the direction of X-axis in relative one pass scanning. Same measurement is made repeatedly in the direction of the plate thickness of the work piece 4, that is, in the direction of Y-axis, to obtain measurement data of the object surface 4a. The measurement data thus obtained are obtained as discontinuous measurement data not only in the direction of X-axis but also in the direction of Y-axis of the object surface 4a.

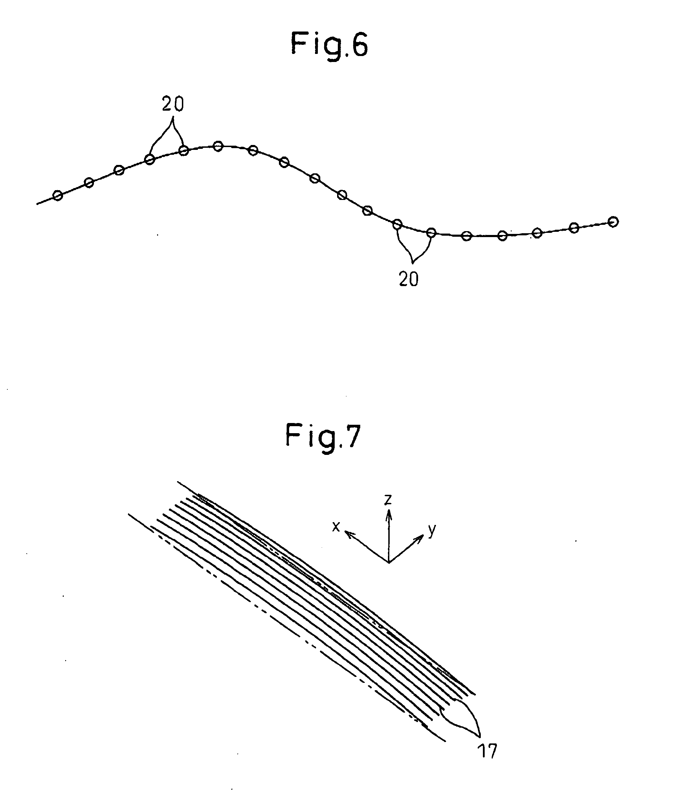

Then, at step S4, a mathematical computation is performed based on the discontinuous measurement data to obtain continuous shape data. That is, as shown by an example of a curve interpolation in Fig. 6, adjoining discontinuous measurement data are interpolated by a curve 17 to obtain continuous 3-dimensional shape data. In Fig. 6, it can be seen that a multiplicity of discrete data 20 represented by white circles are smoothly connected by a curve.

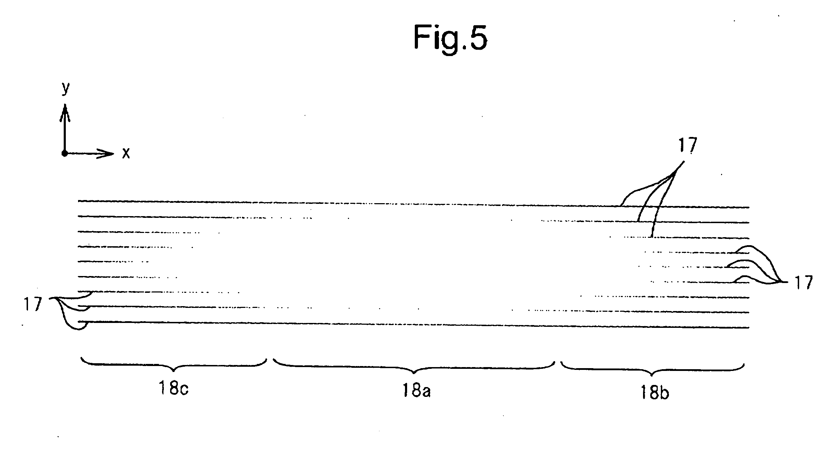

Finally, at step S5, based on the continuous shape data, a 3-dimensional shape of the object surface 4a is displayed on the display 16 in real time. Figs. 5, 7 and 8 are views respectively showing 3-dimensional shape of the object surface 4a, as will be described later.

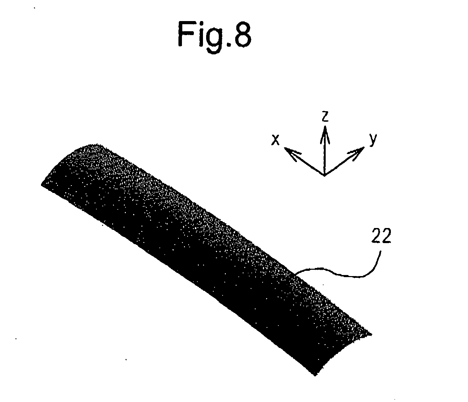

The image display device 3 comprises a storage means for storing the measurement data of the object surface 4a measured with the probe 8, a calculating means for interpolating the discontinuous measurement data, and a display 16 for displaying the shape of the object surface 4a as an image. The calculating means calculate a 2-dimensional curve 17 as well as a 3-dimensional curved surface 22 based on a multiplicity of measurement data stored in the storage means. The display 16 displays the 2-dimensional curve 17 as shown in Fig. 5, and also displays the 3-dimensional curved surface 22 as shown in Fig. 8.

Fig. 5 shows a 3-dimensional curved surface. In the Figure, the plane of paper represents X-Y plane, and the direction perpendicular to the plane of paper represents the direction of Z-axis. As shown in the Figure, in the curve 17 for each pass arranged in parallel to each other, the different magnitude of the sum of displacement of the probe 8 in the direction of Z-axis and Z-coordinate of the machine tool is represented by different brightness. It can be seen that, in the center portion 18a with higher brightness, the sum of the direction of Z-axis of the probe 8 and the Z-coordinate of the machine tool is greater, and in two lateral portions 18b, 18c with lower brightness, the sum of the displacement in the direction of Z-axis of the probe 8 and the Z-coordinate of the machine tool is less. The state of undulation of the object surface 4a can be thereby displayed as an image.

Fig. 7 is a view showing the curve 22 calculated by the calculating means in a solid wire frame model (line form). In this Figure, the state of undulation of the object surface 4a is represented not by the brightness but by a solid image. Fig. 8 is a view showing the 3-dimensional curved surface 22 in a solid form display (surface form) in order to render the solid undulation more evident.

As has been described above, in accordance with the image display method of the present embodiment for displaying a surface shape, measurement data of the object surface 4a are obtained by measuring a multiplicity of measurement positions on the object surface 4a while the probe 8 is being moved relatively on the object surface 4a to be measured, and based on the obtained measurement data, surface shape of the object surface 4a is displayed on the image display device 3 in real time, so that the state of the object surface 4a of the work piece 4 can be recognized simultaneously with the measurement. Therefore, an anomaly of the machine 1 or an anomaly of the work piece 4 can be instantly grasped, and the reliability of the machine processing can be thereby improved.

The present invention is by no means limited to the above-described embodiment, but can be implemented in various modifications without departing from the spirit of the present invention.

## Claims

1. An image display method for displaying a surface shape by measuring an object surface (4a) of a work piece (4) to be measured with a contact probe (8a) placed on a machine and displaying said surface shape of said object surface (4a) on a screen based on measured shape data of said object surface,
**characterized in that** said method comprises:
measuring a multiplicity of measuring positions on said object surface (4a) to be measured with said probe (8a) while relatively moving said probe (8a) on said object surface (4a) in order to obtain continuous shape data of said object surface (4a); and
displaying said surface shape of said object surface (4a) in real time based on said continuous shape data.

2. An image display method for displaying a surface shape as claimed in claim 1,
**characterized in that** said continuous shape data are calculated from discontinuous shape data of said work piece (4) using a mathematical computation method, and that said surface shape of said object surface (4a) is displayed based on said calculated continuous shape data.

3. An image display method for displaying a surface shape as claimed in claim 2,
**characterized in that** said continuous shape data are calculated by a curve interpolation of said adjoining discontinuous shape data.

4. An image display method for displaying a surface shape as claimed in claim 1,
**characterized in that** said surface shape of said object surface (4a) is measured with said probe (8a) in contact with said object surface (4a) under a specified contact pressure in an axial direction of said probe (8a), while said probe (8a) is being relatively moved in a direction orthogonal to said axial direction so as to move said probe (8a) along said object surface (4a) of said work piece (4).

5. An image display method for displaying a surface shape as claimed in claim 4,
**characterized in that** a magnitude of numerical value of a sum of a displacement data in the axial direction of said probe (8a) and a machine coordinate in said axial direction of said probe (8a) is displayed by a brightness such that said brightness is highest in a portion with the greatest numerical value of said sum and said brightness is gradually lowered as said magnitude of numerical value of said sum decreases from said portion of the greatest numerical value.
